Europäisches Patentamt

European Patent Office

Office européen des brevets

(11) Veröffentlichungsnummer: **0 066 098**
A1

(12) # EUROPÄISCHE PATENTANMELDUNG

(21) Anmeldenummer: 82103709.0

(22) Anmeldetag: 30.04.82

(51) Int. Cl.³: **F 16 J 10/02**
F 16 J 13/10, F 16 B 3/04

(30) Priorität: 29.05.81 DE 3121263

(43) Veröffentlichungstag der Anmeldung:
08.12.82 Patentblatt 82/49

(84) Benannte Vertragsstaaten:
AT CH DE FR GB IT LI

(71) Anmelder: WABCO Westinghouse Fahrzeugbremsen GmbH
Am Lindener Hafen 21 Postfach 91 12 80
D-3000 Hannover 91(DE)

(72) Erfinder: Gross, Friedrich
Im Tale 6
D-3016 Seelze(DE)

(74) Vertreter: Schrödter, Manfred
WABCO Westinghouse Fahrzeugbremsen GmbH Am
Lindener Hafen 21 Postfach 91 12 80
D-3000 Hannover 91(DE)

(54) Zylinder, insbesondere Arbeitszylinder für pneumatische oder hydraulische Druckmedien.

(57) Das Zylinderrohr (11) weist an seinem dem Zylinderdeckel (1) zugewandten Ende eine Schulter (5) auf, welche an der dem Zylinderrohr (11) zugewandten Stirnfläche des Zylinderdeckels (1) anliegt. In einem sich in Richtung auf das Zylinderrohr (11) zu erstreckenden ringförmigen Fortsatz (8) des Zylinderdeckels (1) ist eine umlaufende Nut (6) zur Aufnahme eines elastischen Verriegelungselementes (7), z.B. einer Schraubenfeder, vorgesehen. Der Querschnitt der Schraubenfeder (7) ist so bemessen, daß die Schraubenfeder (7) die Schulter (5) des Zylinderrohres (11) gegen die dem Zylinderrohr (11) zugewandte Stirnfläche des Zylinderdeckels (1) drückt und so den Zylinderdeckel (1) mit dem Zylinderrohr (11) spielfrei verbindet.

Fig.1

Hannover, den 20.05.81
WP 28/81  K/Gr


WABCO Fahrzeugbremsen GmbH, Hannover


Zylinder, insbesondere Arbeitszylinder für pneumatische oder
hydraulische Druckmedien

Die Erfindung betrifft einen Zylinder, insbesondere einen Arbeitszylinder  für pneumatische oder hydraulische Druckmedien, gemäß dem Oberbegriff des Patentanspruchs 1.

Eine Verbindung zwischen dem Zylinderrohr und dem Zylinderdeckel ist auf verschiedene Art und Weise herstellbar.
Denkbar ist es z.B., den Zylinderdeckel auf das Zylinderrohrende aufzuschrauben oder zwei, die Zylinderrohr-Enden verschließende Zylinderdeckel mittels Zuganker miteinander zu
verbinden, so daß das Zylinderrohr zwischen den zwei Zylinderdeckeln eingespannt ist.

Eine relativ einfache Verbindung zwischen dem Zylinderrohr umd
dem Zylinderdeckel ist aus der DE-OS 15 25 619 bekannt.
Der in dieser Druckschrift beschriebene Zylinder besteht aus
einem an seinem linken Ende nach außen aufgebogenen Zylinderrohr,
einem Zylinderdeckel und einem Boden.

Der Zylinderdeckel weist einen in das Zylinderrohr hineinragenden, eine Abstufung des Zylinderdeckels bildenden ringförmigen Fortsatz auf, der an der Innenwand des Zylinderrohres
anliegt. Die Abstufung weist eine abgeschrägte Fläche auf, an
welcher der nach außen aufgebogene Bereich des Zylinderrohres
anliegt. Mittels einer auf das Zylinderrohr aufgeschobenen mit
dem Zylinderdeckel verschraubten Überwurfmutter wird der aufgebogene Bereich des Zylinderrohres gegen die abgeschrägte
Fläche der Abstufung des Zylinderdeckels gepreßt und so das
Zylinderrohr mit dem Zylinderdeckel verspannt.

Diese bekannte Befestigungsart hat den Nachteil, daß sich die
Verschraubung u.U. lockern kann, so daß eine druckdichte Verbindung von Zylinderrohr und Zylinderdeckel nicht mehr gewährleistet ist.

Es ist natürlich auch denkbar, in die Wandung des Zylinderrohres
eine erste Ringnut und auf dem Umfang des Zylinderdeckels eine
zweite Ringnut vorzusehen und mittels eines in beide Ringnuten
eingreifenden Sprengringes den in das Zylinderrohr eingeschobenen
Zylinderdeckel mit dem Zylinderrohr zu verspannen.
Bei einer derartigen Verbindung müßten die den Sprengring aufnehmenden Nuten einen Querschnitt aufweisen, der größer ist als
der Querschnitt des Sprengringes, um bei der Montage den Sprengring in die Nuten einlegen zu können.
Der Effekt wäre der gleiche wie bei einer gelockerten Schraubverbindung von Zylinderdeckel und Zylinderrohr.

Der Erfindung liegt deshalb die Aufgabe zugrunde, einen Zylinder der eingangs genannten Art zu schaffen, der eine einfache und spielfreie Verbindung zwischen Zylinderrohr und Zylinderdeckel aufweist.

Diese Aufgabe wird mit der im Patentanspruch 1 angegebenen Erfindung gelöst.

Vorteilhafte Weiterbildungen und Ausgestaltungen der Erfindung werden in den Unteransprüchen aufgezeigt.

Die Erfindung bietet den Vorteil, ohne Zuhilfenahme von Werkzeugen durch einfaches Einschieben oder Einziehen des Verriegelungselementes in eine im Zlinderdeckel vorgesehene Ringnut den Zylinderdeckel mit dem Zylinderrohr verriegeln zu kömnen. Bei Verwendung eines elastischen Verriegelungselementes, welches gemäß einer vorteilhaften Ausgestaltung der Erfindung als enggewickelte, schraubenförmige Feder ausgebildet sein kann, wird eine spielfreie Verbindung zwischen Zylinderdeckel und Zylinderrohr erzielt.

Ein ungewolltes Lockern der Verbindung ist ausgeschlossen, da das elastische Verrieglungselement beim Einführen in die im Zylinderdeckel vorgesehene Ringnut seinen Querschnitt verringert und nach dem Einführvorgang bestrebt ist, seinen ursprünglichen Querschnitt wiederzuerlangen, wodurch ein Nachstelleffekt erreicht wird.

Das Entfernen des Verrieglungselementes zwecks Demontage des Zylinderdeckels wird ebenfalls durch die Querschnittsverringerung des elastischen Verriegelungselementes beim Herausziehen aus der Ringnut erreicht.

Anhand der Zeichnung wird ein Ausführungsbeispiel der Erfindung nachstehend näher erläutert.

Es zeigen:

Fig. 1 einen Längsschnitt durch einen Teil eines Zylinderrohres mit Zylinderdeckel und

Fig. 2 einen Querschnitt durch ein Zylinderrohr mit Zylinderdeckel.

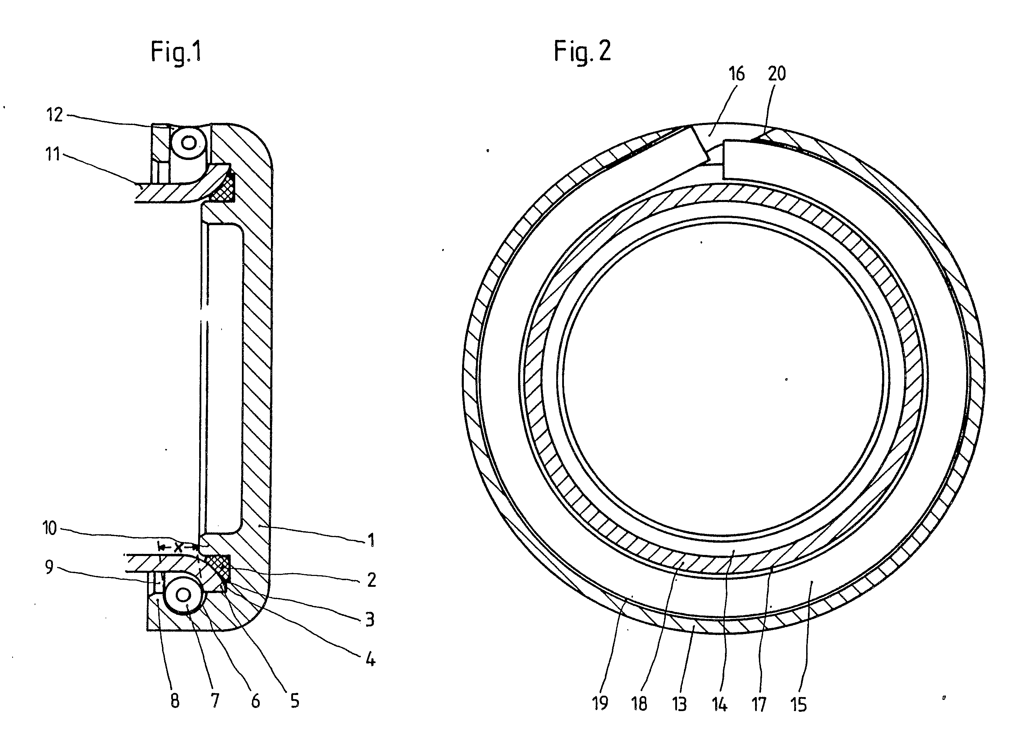

In Fig. 1 ist ein Zylinderdeckel 1 dargestellt, der einen ersten ringförmigen Fortsatz 8 und einen koaxial zu diesem angeordneten zweiten ringförmigen Fortsatz 10 aufweist. Die beiden Fortsätze 8 und 10 bilden die Flanken einer Ringnut 9, deren Nugrund eine erste Abstufung 4 und eine zweite Abstufung 3 aufweist. In die vom ersten Fortsatz 8 gebildete Flanke der Ringnut 9 ist eine umlaufende Nut 6 eingearbeitet, welche einen in etwa halbreisförmigen Querschnitt aufweist. Die umlaufende Nut 6 dient zur Aufnahme eines als enggewickelte schraubenförmige Feder ausgebildeten Verriegelungselementes 7. Das Verriegelungslement 7 übergreift den in Form einer Schulter 5 nach außen kontinuierlich aufgebogenen Endbereich eines Zylinderrohres 11, welches auf den zweiten Fortsatz 10 des Zylinderdeckels 1 aufgeschoben ist und drückt die Schulter 5 gegen die erste Abstufung 4 des Nutgrundes, der aus den beiden Fortsätzen 8, 9 gebildeten Ringnut 9. Ein ringförmiges Dichtelement 2 ist im freien Raum zwischen der zweiten Abstufung 3 und dem eine Flanke der Ringnut 9 bildenden zweiten Fortsatz 10 angeordnet, derart, daß es einen möglichen Spalt zwischen der Zylinderrohrinnenwand und dem zweiten Fortsatz 10 abdichtet. Eine die Zylinderdeckelwand 1 in radialer Richtung durchdringende, zur Nut 6 führende Bohrung 12 dient zum Einführen des Verriegelungselementes 7 in die Nut 6.

Die Montage des Zylinderdeckels am Zylinderrohr wird nachstehend näher erläutert.

Auf den zweiten ringförmigen Fortsatz 10 des Zylinderdeckels 1 wird zuerst das ringförmige Dichtelement 2 geschoben, und zwar soweit, bis es an der zweiten Abstufung 3 der Ringnut 9 zur Anlage kommt. Dann wird das Zylinderrohr 11 mit seinem nach außen aufgebogenen Bereich in die Ringnut 9 eingeführt, so daß der erste Fortsatz 8 das Zylinderrohr-Ende topfförmig umgibt und gegen den Widerstand des elastischen Dichtelementes 2 gegen die erste Abstufung 4 der Ringnut 9 gedrückt. Die als Verriegelungselement 7 dienende spiralförmige Feder wird durch die im Zylinderdeckel 1 angeordnete Bohrung 12 in die Nut 6 geschoben.

Da der Querschnitt des Verriegelungselementes 7, gleich oder größer ist als der Abstand zwischen der Schulter 5 des Zylinderrohres 11 und der dieser gegenüberliegenden Seite der das Verriegelungslement 7 aufnehmenden Nut 6 (in Fig. 1 Abstand X), werden das Zylinderrohr 11 und der Zylinderdeckel 1 von dem Verriegelungslement 7 spielfrei zusammengehalten.

Um den Anpreßdruck zwischen Zylinderdeckel 1 und der Schulter 5 des Zylinderrohres 11 zu erhöhen , ist es möglich, eine Schraubenfeder zu wählen, deren Querschnitt größer ist als der Abstand X zwischen der Schulter 5 des Zylinderrohres 11 und der diesem gegenüberliegenden Seite der Nut 6.

In diesem Fall müßte das als Schraubenfeder ausgebildete Verriegelungselement 7 in die Nut 6 eingezogen werden.
Dies würde in der Weise erfolgen, daß ein Zugdraht, an dessen einem Ende das Verriegelungselement 7, befestigt wird durch die Bohrung 12 des Zylinderdeckels 1 in die Nut 6 eingeführt und soweit geschoben wird, bis das freie Ende des Zugdrahtes wieder aus der Bohrung 12 austritt. Durch anschließendes Ziehen am Zugdraht wird das Verriegelungselement 7 in axialer Richtung gedehnt, wodurch sich sein Durchmesser verringert und es sich so in die Nut 6 einziehen läßt.

Die Demontage des Zylinderdeckels 1 vom Zylinderrohr 11 erfolgt auf einfache Art und Weise dadurch, daß ein schraubenartig ausgebildeter Dorn in das in der Bohrung 12 des Zylinderdeckels 1 befindliche freie Ende des Verriegelungslementes 7 eingeschraubt und das Verriegelungselement7 mit Hilfe des Dornes aus der Nut 6 herausgezogen wird.

Da sich das Verriegelungelement 7 bei diesem Vorgang längt und somit seinen Querschnitt verringert, ist es ohne Schwierigkeiten möglich, durch Verschmutzung sehr festsitzende Verriegelungslemente leicht zu entfernen.

Fig. 2 zeigt einen Querschnitt durch einen Zylinderdeckel und den mit diesem verbundenen Endbereich eines Zylinderrohres, wobei zum besseren Verständnis des Einführvorganges eines Verriegelungselementes in eine im Fortsatz des Zylinderdeckels angeordnete Nut das Verriegelungselement erst zumm Teil in die Nut eingebracht ist.

In eine aus zwei koaxial zueinander angeordneten ringförmigen Fortsätzen 14 und 13 eines Zylinderdeckels gebildete Ringnut 17, ist der in Form einer Schulter nach außen aufgebogene Endbereich eines Zylinderrohres 18 eingeschoben. Der äußere Fortsatz 13 weist eine in seiner dem Zylinderrohr 18 zugewandten Seite eingearbeitete umlaufende Nut 19 zur Aufnahme einer Spiralfeder 15 auf. Eine in den äußeren Fortsatz 13 eingebrachte, schräg auf die Nut 19 zulaufende Bohrung 16, die mit einer Anphasung 20 versehen ist, dient zum Einführen der Spiralfeder 15 in die Nut 19.

Die Abbildung zeigt, wie die Spiralfeder 15 durch die Bohrung 16 in die Nut 19 eingeschoben wird.

Patentansprüche

1. Zylinder, insbesondere Arbeitszylinder, für pneumatische oder hydraulische Druckmedien, welcher die folgenden Merkmale aufweist:

a) der Zylinder besteht aus einem Zylinderrohr, welches an wenigstens einem Ende von einem Zylinderdeckel verschlossen wird;

b) das Zylinderrohr weist an seinem dem Zylinderdeckel zugewandten Ende eine Schulter auf;

c) es sind Mittel vorgesehen, mittels welcher die Schulter des Zylinderrohres mit dem Zylinderdeckel verriegelbar ist;

gekennzeichnet durch die folgenden Merkmale:

d) der Zylinderdeckel (1) weist einen ersten Fortsatz (8) auf, welcher auf derjenigen Seite der Zylinderrohr-Wandung angeordnet ist, auf der die Schulter (5) des Zylinderrohres (11) liegt;

e) zwischen der Schulter (5) des Zylinderrohres (11) und dem ersten Fortsatz (8) ist ein Verriegelungslement (7) angeordnet;

f) der erste Fortsatz (8) weist einen Vorsprung (6) zur Abstützung der Verriegelungselementes (7) in Längsrichtung des Zylinderrohres (11) auf, der so angeordnet ist, daß das Verriegelungselement (7) zwischen der Schulter (5) des Zylinderrohres (11) und dem Vorsprung liegt.

2. Zylinder nach Anspruch 1, dadurch gekennzeichnet, daß der Vorsprung von einer in Umfangsrichtung des Zylinder-

rohres (11) verlaufenden Ausnehmung (6) des ersten Fortsatzes (8) gebildet wird.

3. Zylinder nach Anspruch 1, dadurch gekennzeichnet, daß der Fortsatz (8) als ringförmiger Teil des Zylinderdeckels (1) ausgebildet ist.

4. Zylinder nach Anspruch 1; dadurch gekennzeichnet, daß das Verrieglungselement (7) als elastisches Teil ausgebildet ist, derart, daß es zwischen der Schulter (5) des Zylinderrohres (11) und dem Vorsprung des ersten Fortsatzes .(8) als Feder wirkt.

5. Zylinder nach Anspruch 1, dadurch gekennzeichnet, daß die Schulter (5) durch kontinuierliche Verengung oder Erweiterung des Zylinderrohr-Endes gebildet wird.

6. Zylinder nach wenigstens einem der vorhergehenden Ansprüche, dadurch gekennzeichnet, daß die Schulter (5) auf der dem Verriegelungselement (7) zugewandten Seite abgerundet ist.

7. Zylinder nach wenigstens einem der vorhergehenden Ansprüche, dadurch gekennzeichnet, daß die Schulter (5) nach außen weist.

8. Zylinder nach Anspruch 1, gekennzeichnet durch die folgenden Merkmale:

   a) der Zylinderdeckel (1) weist einen zweiten Fortsatz (10) auf, der auf der der Schulter (5) abgewandten Seite der Zylinderrohr-Wandung liegt;

   b) zwischen dem zweiten Fortsatz (10) und dem Zylinderrohrende ist ein Dichtelement (2) angeordnet.

9. Zylinder nach Anspruch 8, <u>dadurch gekennzeichnet</u>, daß der erste Fortsatz (8) und der zweite Fortsatz (10) eine das mit der Schulter (5) versehene Ende des Zylinderrohres (11) aufnehmende Ringnut (9) bilden.

10. Zylinder nach Anspruch 9, <u>dadurch gekennzeichnet</u>, daß das Dichtelement (2) auf dem Grund der Ringnut (9) liegt.

11. Zylinder nach wenigstens einem der vorhergehenden Ansprüche, <u>dadurch gekennzeichnet</u>, daß als Verriegelungselement (7) eine schraubenförmig ausgebildete Feder dient.

12. Zylinder nach Anspruch 1, <u>dadurch gekennzeichnet</u>, daß der erste Fortsatz (8) das Ende des Zylinderrohres (11) topfförmig umgibt.

13. Zylinder nach wenigstens einem der vorhergehenden Ansprüche, <u>dadurch gekennzeichnet</u>, daß die das Verriegelungselement (7) aufnehmende Ausnehmung (6) mit einer den Zylinderdeckel (1) durchdringenden Bohrung (12) zum Einführen des Verrieglungselementes (7) in die Ausnehmung (6) verbunden ist.

14. Zylinder nach Anspruch 1, <u>dadurch gekennzeichnet</u>, daß der Querschnitt des Verrieglungselementes (7) gleich oder größer ist als der Abstand zwischen der Schulter (5) des Zylinderrohres (11) und der der Schulter (5) zugewandten Seite des Vorsprunges.

# Fig.1

# Fig.2

8609098

Europäisches
Patentamt

**EUROPÄISCHER RECHERCHENBERICHT**

Nummer der Anmeldung

EP 82 10 3709.0

| | EINSCHLÄGIGE DOKUMENTE | | | KLASSIFIKATION DER ANMELDUNG (Int Cl ) |
|---|---|---|---|---|
| Kategorie | Kennzeichnung des Dokuments mit Angabe, soweit erforderlich, der maßgeblichen Teile | | betrifft Anspruch | |
| Y | DE - C - 946 580 (A. VOGTS) <br> * Anspruch 1; Fig. 1, 5 * <br> — | | 1-7, <br> 12-14 | F 16 J 10/02 <br> F 16 J 13/10 <br> F 16 B 3/04 |
| Y | FR - A - 911 263 (BOWDEN LTD.) <br> * Fig. 11 * <br> — | | 1-7, <br> 12-14 | |
| A | DE - U - 1 737 233 (K. STOLL KG) <br> * Ansprüche 1, 2; Fig. 1 bis 3 * <br> — | | 1,8 | |
| A | DE - U - 1 842 155 (LICENTIA PATENT-VER-WALTUNGS-GMBH) <br> * Anspruch 1; Fig. 1, 2 * <br> — | | 1,8-10 | RECHERCHIERTE SACHGEBIETE (Int Cl ) |
| A | DE - U - 1 865 328 (G. HÜDIG) <br> * Anspruch; Fig. 1, 2 * <br> — | | 1,8,11 | F 16 B 3/00 <br> F 16 J 10/00 <br> F 16 J 13/00 |
| A | FR - A1 - 2 438 193 (A. BEDUE) <br> * Fig. 3, 4 * <br> — | | 1,11, <br> 14 | |
| D,A | DE - A - 1 525 619 (FESTO-MASCHINENFA-BRIK G. STOLL) <br> — | | | |
| A | US - A - 2 436 407 (W.T. STEPHENS) <br> ———— | | | KATEGORIE DER GENANNTEN DOKUMENTE |

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| Berlin | 03-08-1982 | MASSALSKI |